# EUROPEAN PATENT APPLICATION

(11) **EP 4 006 673 A1**
(43) Date of publication of application: **01.06.2022**
(21) Application number: 21827168.2
(22) Date of filing: 26.05.2021
(51) Int. Cl.: G05B 19/418, G06Q 50/04

(54) **SYSTEM AND METHOD FOR MONITORING GLASS PRODUCT PRODUCTION PARAMETERS**

(30) Priority: 22.09.2020 RU 2020131243
(71) Applicant: OBSHCHESTVO S OGRANICHENNOJ OTVETSTVENNOST'YU "SIBIR' TELEMATIKA", Novosibirsk 630090 (RU)
(72) Inventor: NOVIKOV, Ivan YUr'evich, Novosibirsk, 630055 (RU); SYSALOV, Vladislav Sergeevich, Berdsk, 633004 (RU); ZMANOVSKIJ, Vladimir Mihajlovich, Novosibirsk, 630099 (RU)
(74) Representative: Vitina, Maruta
(86) International application number: PCT/RU2021/050137
(87) International publication number: WO 2022/066049

(57) **Abstract**

The technical decision relates to control of technological processes and can be used for monitoring and optimizing the production of glass products.

Technical results of the claimed invention consist in ensuring the continuous and uninterrupted collection of objective data from all technological sections of the production line and optimization of the whole production process on the basis of their analysis.

Technical results are achieved in that
Technical results are achieved due to the method for placing control units and communication units on a production line, which makes it possible to collect data about parameters and to transmit for their control unit with the possibility to receive the command data back.

## Description

The technical decision relates to control of technological processes and can be used for monitoring and optimizing the production of glass products.

One of the most important problems in glass production is the low level of automation. Technological sections of the production lines consist of equipment from different manufacturers and generations. Automatic process control system (APCS), software and interfaces provided by the equipment manufacturers (in cases where they are) work locally in terms of their technological task, not allowing the "view" across the whole production chain and thus effectively controlling all the cycles of operations considering the relationship between them.

In addition, relevant issues for productive enterprises are obtaining timely and reliable information on the efficiency of the production process, the movement of the raw materials, the volume of losses and rejects, and the raw materials balance information.

There are known automated methods for controlling the parameters of technological processes and systems for implementing them (v., for example, patents RU: No 2693785, IPC B01D53/14, G05D27/00, published 04.07.2019; No 2508252, IPC C02F3/02, G05D27/00, published 27.02.2014; No 2724772, IPC B01D3/42, G05D27/00, published 25.06.2020).

The known methods make it possible to solve the management issues of highly defined specialized technological processes and their application in other technical fields impossible.

There are ways of producing glass products and systems for their sale (v., for example, patents RU: No 2338701, IPC C03B18/02, published 20.11.2008; No 2693068, IPC C03C17/22, B82Y30/00, published 01.07.2019; No 2266259, IPC C03B5/235, C03B3/00, C03B5/04, published 20.12.200), which provide certain operating modes for specific parts of the technological line.

The known methods and systems make it possible to obtain products with certain preset characteristics, but do not provide control due to these characteristics and do not allow automatic change of line operation parameters in cases of deviation from optimum.

The automated process control system is known (http://www.nam-group.ru/realizovannie_proekti/10), which provides control:
gas flow rate on each burner,
pressure and temperature of gas at inlet,
rarefaction of exhaust gases before the pipe and before the gate,
temperature of glass mass and gas space at different points,
the operation of the fan motors and the pressure in the air ducts,
water consumption for cooling the equipment,
sequence of mechanisms during the conversion of the flame direction.

The well-known APCS for glassmaking makes it possible to quickly display technological modes and equipment conditions, cut off the gas flow and issue an alarm when the safety automation is triggered, record the actions of operators, generate output and reporting documentation, and create archive databases.

The disadvantage of the known system is the absence of control over production parameters in other technological sections and, as a result, impossibility of adjustment the optimal modes of the whole production.

Technical results of the claimed invention consist in ensuring the continuous and uninterrupted collection of objective data from all technological sections of the production line and optimization of the whole production process on the basis of their analysis.

Technical results are achieved in that system for monitoring production parameters of glass products includes at least one unit located directly on each technological section of the production line, a communication unit, sensors for collecting basic parameters and a control unit, which is located outside the production line, with each of the communication units located at a certain technological section is connected, on the one side, with sensors for collecting basic parameters of this technological section with the possibility of obtaining data on the parameters, and, on the other side, with the control unit, with the possibility of transmitting received data to it and receiving command data back.

In addition, the communication units can be servers.

In the text of the application, the terms have the following meanings:
- 'server' - a computing device separated from a group of similar devices for performing any service task without direct human participation, it is possible to use a computer, workstation, smartphone, etc. as a server, if their technical parameters correspond to the tasks being performed,
- communication unit - a device or system for receiving, processing and transmitting data between certain elements of the technological line (including both sides),
- control unit - a device or system for processing and analyzing data received from all parts of the technological line and producing a data set for further execution.

The technical results are also achieved due to the fact that the method for monitoring production parameters of glass products by means of the claimed system includes the following sequence of actions:
- real-time detection of basic parameters by sensors,
- transmission of parameter data from basic parameter collection sensors to the appropriate communication unit,
- transmission of parameter data from each of the communication units to the control unit. In addition, in each of the communication units, in parallel with the transfer, the data received from the sensors for collecting basic parameters are stored and accumulated, in the control unit the data received from each of the communication units are jointly processed, and, based on the processing results, a set is formed in the control unit command data, then transmitted to the corresponding communication units.

The claimed invention is presented by a drawing on which is a basic block diagram of the operation of the system for monitoring production parameters of glass products.

The system for monitoring production parameters of glass products comprises the sensors for collecting basic parameters (1), the communication units (2), the elements of which are programmable logic controller (3), a microcomputer (4), an autonomous power supply device (5) and an industrial switch (6), the control unit (7).

The device of the claimed technical decision is implemented as follows.

The communication units (2) (CU) are installed on each of the technological sections (TS) of the production line, which contain:
- a programmable logic controller (3) (PLC) with a basic set of input-output ports (RS-232/422/485, analog inputs / outputs, discrete inputs / outputs) with the possibility of expanding them with additional modules,
- a microcomputer (4) for receiving, primary processing and storing sensor data using ethernet interfaces (RJ45), as well as with PLC,
- an autonomous power supply device (5),
- an industrial switch (6) for organizing the internal network of the unit and connecting external devices to it,
- air temperature sensors for temperature control inside the unit and outside on the technological sections of the production line.

Each CU (2) is connected via a PLC (3) with the sensors for collecting basic parameters (1), which are installed at the TS, as well as through the industrial switch (6) - with the enterprise's network infrastructure on available communication lines (wired or wireless), further, through it, with the control unit (7) which can be used as a server.

The system for monitoring production parameters of glass products works as follows.

For each technological sections of the production line (a section of compound shop, a section of glassmaking, a section of glassforming, a section of inspection equipment, a section of outgoing inventor) is used a specialized communication unit (2).

Primary data from sensors for collecting basic parameters (1), which are located at each sections, are received at (2) relevant sections. In this case, the list of basic parameters for each section is determined in accordance with the technological processes carried out on it, so in production of the hollow glass (bottle, special product, etc.):
- at the section of compound shop - weight of raw material in ingredients by furnace,
- at the section of glassmaking - temperature in the furnace and feeder gate, gas and air consumption,
- at the section of glassforming - product weight, speed of operation, number of cut drops, number of drops loaded in sections (by sections), number of deflated products at the output of glassforming machine (in section of sections), temperature of air in the furnace (LER) by zones,
- at the section of inspection equipment - number of products on each machine and number of rejected products in section of defects, number of defects on each machine, number of products on sensor,
- at the section of outgoing inventor - number of items and pallets in section of statuses: packed, accepted, rejected pieces, unloaded.

In cases of manufacturing other types of glass products (sheet glass, glass fibre), the controlled base parameters in certain unit may differ from those listed in the description.

The specific design of the sensors for collecting basic parameters (1) is not considered in present application, but known devices of different designs can be used, which make it possible to detect a given parameter, including those installed on TS equipment (in cases of their existence).

The data from the sensors are sent to the CU (2) where they are processed and stored by the microcomputer (4). Further, the data are transmitted by the industrial switch (6) via the enterprise network to the control unit (7) (CU) by a fault-tolerant manner (sending to the control unit (7) the next data package awaiting confirmation from the control unit (7) about receiving and saving the package, setting the label in the package as successfully transferred to the control unit (7)).

The use of specialized CU (2) makes it possible to solve problems of gathering information on production processes at a new technological level, namely:
- ensure continuous data collection regardless of technical problems and temporary failures in the enterprise network infrastructure (bridging of switches, failures on the control unit (7), breaks of communication cables, etc.),
- ensure data collection from APCS, which does not have own archives with data, when data is generated at the time of technological operations and is not recorded in APCS software database (for example, glassforming machines, where only current counter data are stored in memory),
- to reduce the requirements for the reliability of the telecommunication line at the technological sections of the production lines, by distributing data collection via wire communication and placement of the CU (2) at the technological sections of the production line,
- eliminate data loss due to someone's intentional influence on the enterprise network infrastructure at certain times, such as weekends/holidays, nighttime, etc.

The data received from each of the CU (2). In the control unit (7) the data are processed in a complex manner (including analysis). The processed data are stored in the database (DBMS) visualized in parallel for the user.

Based on the processed data, the control units (7) calculate the control signals of the production line, which are transmitted back through the CU (2) to the actuating equipment mechanisms of the corresponding technological sections of the TS.

The claimed technical decision provides objective control over the operation of all sections of the line for producing glass products in real time and makes it possible to rapidly change the modes of production processes, optimizing them according to specified parameters.

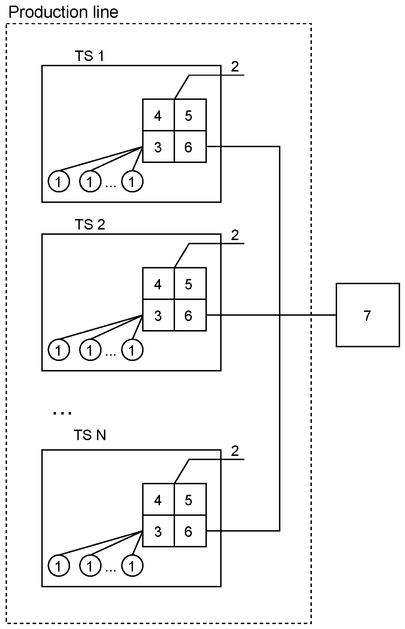

## Claims

1. A system for monitoring production parameters of glass products, which comprises at least one unit directly arranged on each technological section of the production line, a communication unit, sensors for collecting basic parameters and a control unit, which is located outside the production line, with each of the communication units located at a certain technological section is connected, on the one side, with sensors for collecting basic parameters of this technological section with the possibility of obtaining data on the parameters, and, on the other side, with the control unit, with the possibility of transmitting received data to it and receiving command data back.

2. The system for monitoring production parameters of glass products of claim 1 **characterized in that** the communication units are servers.

3. The method for monitoring production parameters of glass products comprises the following consistent set of actions:
- real-time detection of basic parameters by sensors;
- transmission of parameter data from basic parameter collection sensors to the appropriate communication unit;
- transmission of parameter data from each of the communication units to the control unit, in addition, in each of the communication units, in parallel with the transfer, the data received from the sensors for collecting basic parameters are stored and accumulated, in the control unit the data received from each of the communication units are jointly processed, and, based on the processing results, a set is formed in the control unit command data, then transmitted to the corresponding communication units.
